# EUROPEAN PATENT APPLICATION

(11) **EP 3 623 612 A1**
(43) Date of publication of application: **18.03.2020**
(21) Application number: 19196433.7
(22) Date of filing: 10.09.2019
(51) Int. Cl.: F02M 25/022, F02M 25/03, C02F 1/00, C02F 1/48, C02F 5/02

(54) **WATER INJECTION SYSTEM**

(30) Priority: 14.09.2018 IT 201800008618
(71) Applicant: UFI Innovation Center S.r.l., 38061 Ala (Trento) (IT)
(72) Inventor: GIRONDI, Giorgio, 38061 Ala, Trento (IT)
(74) Representative: Gamba, Alessandro

(57) **Abstract**

The invention consists of a water injection system (1) of a vehicle comprising a tank (2), at least one duct (3), at least one injector device (4) fluidically connected to the duct (3) and suitable to inject water into the combustion chamber of the vehicle.

The water injection system (1) further comprises a water treatment and filtration group (10), fluidically located upstream of the injector device (4) so that the latter receives treated and filtered water.

The water treatment and filtration group (10) comprises a water treatment device (100) that performs a nucleation action on the limescale particles and/or agglomeration of the ions of the salts dispersed and dissolved in water and a particle filter (150) suitable to filter from the water the limescale particles formed by the water treatment device (100).

## Description

### Field of application

The present invention relates to a water injection system of a vehicle. In particular, the water injection system of the present invention is suitable to be part of a circuit fluidically connected to the chamber, or the combustion chambers, of a petrol-fuelled internal combustion engine group.

In other words, the present invention relates to the automotive sector and in detail to a water injection system comprised in a vehicle. In particular, the term "vehicle" refers to any means of transport without any limitation related to the type or size, i.e. a vehicle, a motor vehicle, an articulated vehicle etc.

The vehicle comprises a petrol-fuelled, internal combustion engine group to which the water injection system of the present invention is connectable. In particular, the vehicle may be of the hybrid fuel type comprising an internal combustion engine group which can be selectively fuelled with petrol and alternative fuels (such as LPG or methane), which can be connected to the water injection system. Or again, the vehicle may be of the type comprising an internal combustion engine fuelled with petrol, connectable to the water injection system and comprising an electric motor.

### State of the art

In the state of the art, water injection systems fluidically connected to a petrol-fuelled internal combustion engine group are known of in which the water is injected (and nebulised) into the combustion chamber by means of special injector devices. In particular, water is injected into the combustion chamber in addition to the air/petrol mixture to lower the burst temperature, improve engine efficiency and reduce vehicle pollutant emissions.

In the state of the art, it has been verified how mains water has a particularly aggressive action on the various components of the system and the circuit and the vehicle itself in which it circulates, with particular reference to the injector devices. In particular, it has been verified how mains water causes the formation of limescale deposits inside the circuit. Note that, in this discussion, the term "mains water" means water taken from the water mains or water taken from the water distribution network for domestic, agricultural and/or industrial use.

This problem has been addressed and resolved, avoiding pouring mains water into the system, but introducing only demineralised water, i.e. purified from salts, such as carbonates-bicarbonates, sulphates, chlorides, nitrates, etc.

However, this solution entails high costs and supply difficulties, as well as an increase in the costs of maintenance and operation of the water injection system and therefore of the vehicle itself.

### Solution according to the invention

In view of the above, the need to solve the technical problems mentioned by overcoming the need to use only demineralised water in a water injection system is strongly felt.

The object of the present invention is, therefore, to provide a new water injection system in which this need is satisfied.

Such purpose is achieved by the water injection system according to claim 1. Similarly, such purpose is achieved by a water treatment and filtration group as claimed in claim 16. In the same way, this purpose is achieved by using a water treatment and filtration group according to claim 17. The dependent claims show preferred embodiment variants having further advantageous aspects.

### Description of the drawings

Further characteristics and advantages of the invention will, in any case, be evident from the description given below of its preferred embodiments, made by way of a non-limiting example with reference to the appended drawings, wherein:

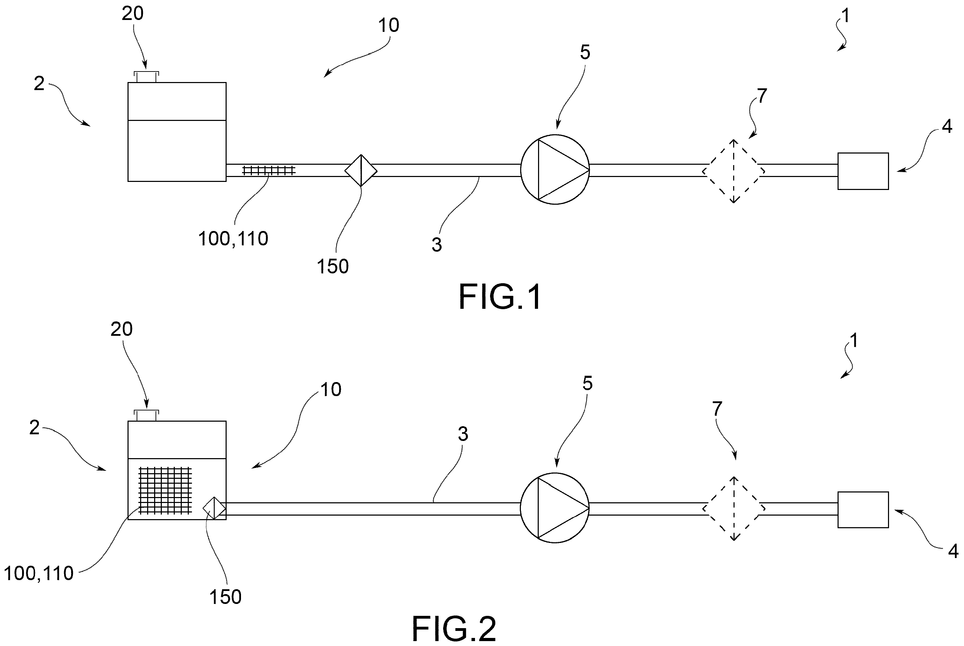

- Figure 1 shows a schematic view of a water injection system of a vehicle, according to the present invention, according to a first embodiment;
- Figure 2 shows a schematic view of a water injection system of a vehicle, according to the present invention, according to a second embodiment;

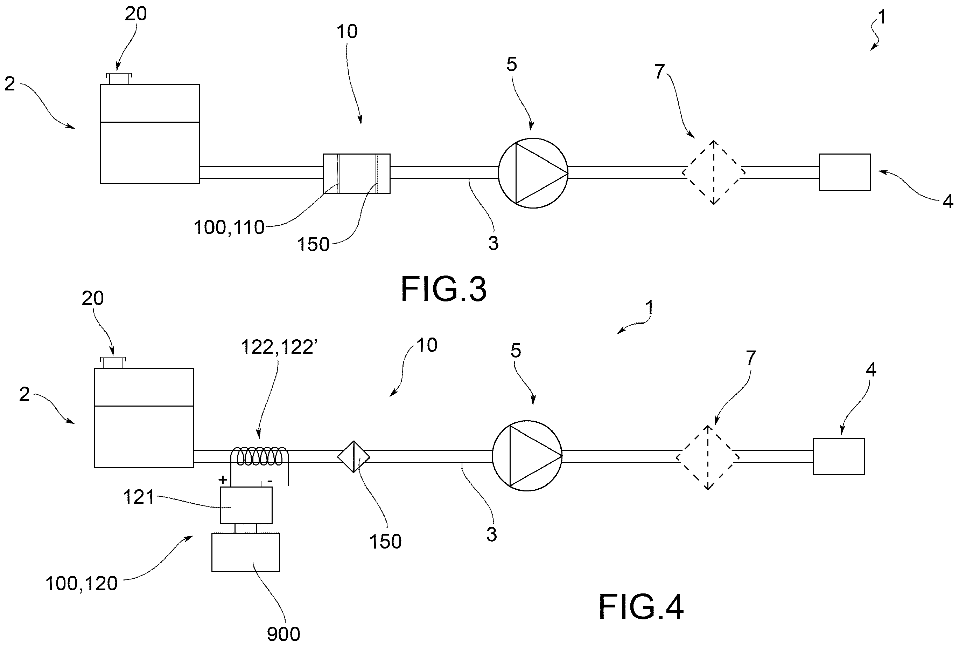

- Figure 3 shows a schematic view of a water injection system of a vehicle, according to the present invention, according to a third embodiment;
- Figure 4 shows a schematic view of a water injection system of a vehicle, according to the present invention, according to a fourth embodiment;

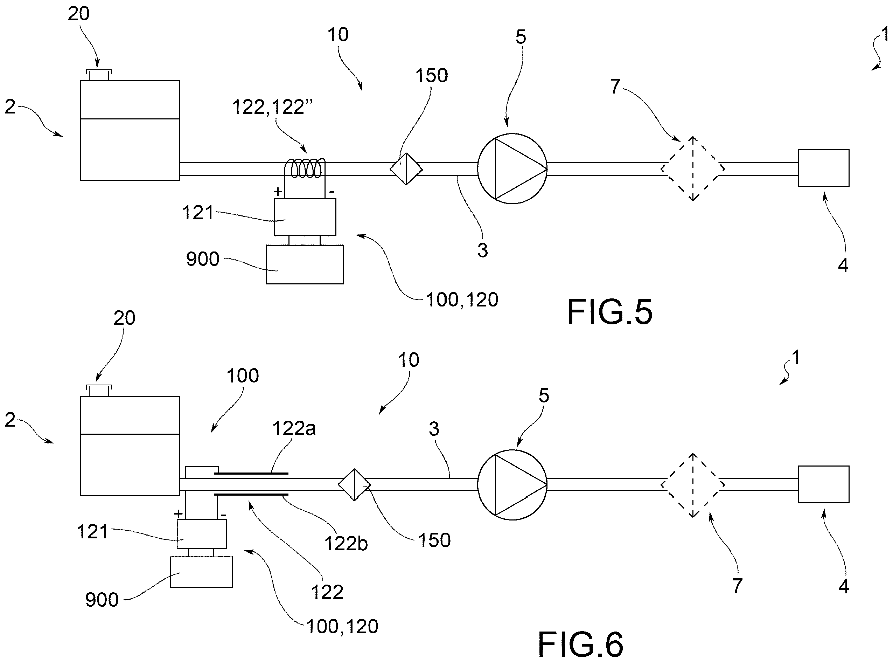

- Figure 5 shows a schematic view of a water injection system of a vehicle, according to the present invention, according to a fifth embodiment;
- Figure 6 shows a schematic view of a water injection system of a vehicle, according to the present invention, according to a sixth embodiment;

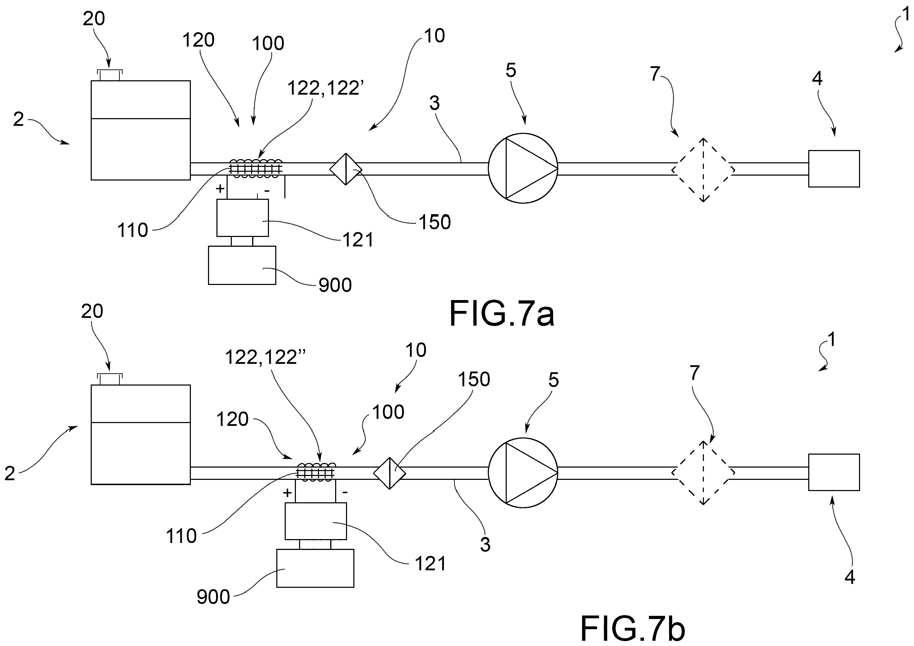

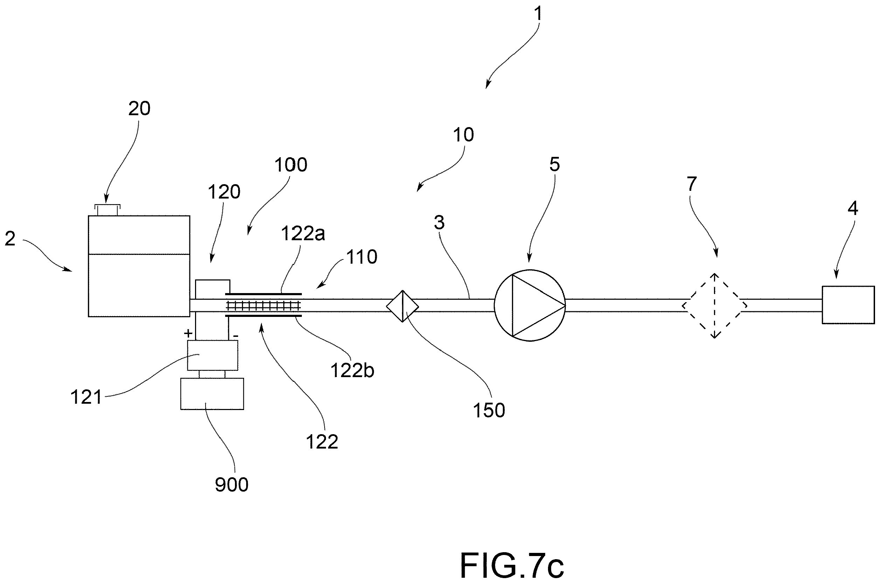

- Figures 7a, 7b and 7c represent respective schematic views of water injection systems, which according to the present invention, comprise the combination of some features present in the solutions shown in Figures 1 to 6.

### Detailed description

With reference to the appended drawings, reference numeral 1 globally denotes a water injection system of a vehicle according to the present invention.

The water injection system 1 is fluidically connected to the combustion chamber of a petrol-fuelled internal combustion engine included in said vehicle. In other words, the water flowing in the water injection system 1 reaches said combustion chamber.

According to the present invention the water injection system 1 comprises a water storage tank 2. The tank 2 may comprise appropriate level sensors/meters (not shown) and a cap 20 to allow the tank to be filled with mains water. Furthermore, according to the present invention the water injection system 1 comprises at least one duct 3 connecting the tank 2 to the combustion chamber of the engine group.

Mains water is characterized by a certain level of hardness, index of the content of calcium and magnesium ions dispersed therein. The hardness is measured, for example, in French degrees °f; 1°f corresponds to 10 mg/l of CaCo3. The total hardness value is the sum of the temporary hardness and permanent hardness. The first is related to the concentration of hydrogenates of Ca++ and Mg++ (calcium and magnesium bicarbonate) while the second is related to the concentration of other salts such as sulphates, chlorides, nitrates (calcium and magnesium). Since the main component of limescale deposits consists of calcium carbonate, to reduce the tendency of mains water to form harmful deposits/particles, the water supply and injection system is able to reduce the value of the temporary hardness of the water sent to the injector device.

According to the present invention, the water injection system 1 comprises at least one injector device 4 fluidically connected to the duct 3 and suitable to inject water into the combustion chamber at a given pressure (i.e. 10 bar).

According to the present invention, the duct 3 extends from the tank 2 to the combustion chamber of the engine group, in the proximity of which the injector device 4 is located.

Preferably, the number of injector devices 4 is a function of the number of combustion chambers and/or the number of cylinders of the internal combustion engine.

Preferably, the shape or number of ducts 3 is a function of the number of combustion chambers and/or the number of cylinders of the internal combustion engine. For example, in a preferred embodiment the duct 3 is single, but has specific duct end sections (or duct end branches) separate from each other, the number of which is a function of the combustion chambers and/or the number of cylinders of the internal combustion engine.

According to the present invention, the water injection system 1 comprises a water treatment and filtration group 10. The water treatment and filtration group 10 is arranged fluidically upstream of the injector device 4 so that the latter receives treated and filtered water.

Preferably, the water treatment and filtration group 10 is positioned between the tank 2 and the injector device 4 along the duct 3. In other preferred embodiments, the water treatment and filtration group is partially or entirely installed in the tank 2.

According to the present invention, the water treatment and filtration group 10 comprises a water treatment device 100 that performs a nucleation and/or an agglomeration action (i.e. growth) on the limescale particles, and in particular on the ions of salts dissolved in the mains water, to determine the formation of particles of limescale having a given particle size and crystallographic characteristics. In particular, in fact, limescale is mainly formed of carbonate and the ions of greater interest involved in the formation of limescale, to be removed are Ca2+, Mg2+, HCO3- and CO3--.

According to the present invention, in addition, the water treatment and filtration group 10 comprises a particle filter 15 suitable to filter from the water the particles of limescale formed as a result of water circulating through the water treatment device 100.

In other words, the water treatment device 100 performs a specific action on the ions of the salts dissolved in the mains water, favouring the nucleation of a specific crystalline form of limescale and/or favouring the aggregation of limescale ions and/or particles to form crystal aggregates of such a size that they can be filtered by filtering devices placed downstream along the water supply system.

Among the crystalline forms of limescale, in fact, calcite (also known as "hard limestone", in English "hard scale") is the most common crystalline form and is characterized by high hardness, high adhesion to surfaces, and high ability to form incrustations. In addition, aragonite (also known as "sludge") can be distinguished, which is a metastable crystalline form and is characterized by low hardness, low adhesion to surfaces and low tendency to form incrustations.

According to a preferred embodiment, the water treatment device 100 performs a treatment of the water thanks to which nucleation and the formation of aragonite instead of calcite is favoured, thereby preventing the formation of limescale in a "hard" crystalline form and thus potentially suitable to damage the components of the water injection system, in particular the components fluidically downstream of the water treatment device 100, (ducts, pump, injectors) and/or potentially suitable to damage the vehicle components, i.e. the engine group, fluidically downstream of the water treatment device 100.

According to a preferred embodiment, the installation of the water treatment device 100 in the portions of the circuit proximal to the tank 2, or even directly in the tank 2, makes it possible to minimize the formation of limescale in all the portions of the system, in particular also in the water storage regions where the probability of formation of incrustation residues is high (depending on the period of storage of the water in the tank, the frequency of water supply taken from the mains and the particular conditions recreated in the tank).

Preferably, the water treatment device 100 is therefore suitable to prevent the formation of incrustations which are hard to remove.

According to a preferred embodiment, the water treatment device 100 comprises a catalyst element 110 by means of which in the volume of circulating water comprising ions and/or particles of calcite and/or particles of aragonite, the nucleation of aragonite from calcium and carbonate ions (Ca2+ and CO3--) or from calcium ions and hydrogen carbonate ions (Ca2+ and HCO3-, respectively) is favoured. In this way, the formation of solid particles of aragonite that can be kept in suspension in the aqueous solution and effectively filtered by the particle filter 150 is favoured, avoiding and/or limiting the formation of calcite-encrusting crystals.

According to a preferred embodiment, the catalyst element 110 is a porous body and can be crossed by water. Preferably, the porous structure maximizes the catalyst exchange surface 110 with water and thereby facilitates the achievement and maintenance of conditions favourable to the nucleation of the aragonite.

According to a preferred embodiment, the catalyst element 110 is in its entirety or at least in part made of a metal material, of the type capable of promoting nucleation of the aragonite.

Preferably, the catalyst element 110 is completely, or at least in part made of copper (or a copper-based alloy), or zinc (or a zinc-based alloy), or a copper and zinc-based alloy. In addition, the catalyst element 110 includes other alloy components suitable to complete the composition of the above-mentioned metal or main metal alloy.

According to a preferred embodiment, the catalyst element 110) is made in the form of a mesh or fabric, or honeycomb, or foam, or sintered metal, or perforated sheet, or micro-perforated sheet, or non-woven fabric with synthetic fibres interwoven with metal fibres or a plastic body coated in metal or a combination of such embodiments.

According to an embodiment variant of the present invention, the water treatment device 100 comprises a variable electromagnetic field generating element 120. The variable electromagnetic field generating element 120 is suitable to create an electromagnetic field, preferably variable, preferably pulsed or alternating, so as to determine the agitation of the ions dissolved in water and the formation of crystals or crystalline aggregates formed from said ions and/or aggregates of limescale particles present therein (both aragonite and calcite). In this way the crystalline aggregates formed are effectively filterable by the particle filter 150.

In other words, the variable electromagnetic field 120, pulsed or alternating, is suitable to create crystalline aggregates of dimensions having an average size greater than 50 µm, preferably greater than 25 µm, preferably greater than 15 µm.

Preferably, the particle filter 150 is suitable to filter and retain particles, i.e. crystalline aggregates, of an average size greater than 5pm, preferably greater than 15pm, preferably greater than 25pm.

According to a preferred embodiment, the variable electromagnetic field generating element 120 comprises an alternating signal generating device 121 (i.e., a signal with alternating electrical voltage) suitable to produce an alternating electromagnetic field by means of a suitable component electrically connected thereto.

Preferably, the alternating signal generator device 121 is electrically supplied in direct current e.g. at 12V, 48V or voltages available on the vehicle.

The power supply voltage to the generator is provided by a battery 900; according to a preferred embodiment, said battery is included and is on board the vehicle in such a way as to make possible and facilitate the integration of the water injection system 1 on the vehicle.

According to a preferred embodiment, the variable electromagnetic field generating element 120 also comprises an emitter device 122 connected to the alternating signal generating device 121 suitable to receive the signal and emit an electromagnetic field in the water circulation space, in particular in the through section defined inside the duct in which water circulates from the tank to the injector device.

Preferably, the emitter device 122 is an electrode, is a multiplicity of electrodes, or is an inductor.

According to a preferred embodiment, the alternating signal generator device 121 comprises an amplifier so as to impose an electrical voltage on the emitter device 122 to create a variable electromagnetic field. The amplifier increases the intensity of the electrical signal (voltage value) emitted by the alternating signal generating device 121 to transmit it to the emitter device 122.

According to a preferred embodiment, the emitter device 122 comprises at least one electrical conductor positioned outside the outer surface of the duct 3.

According to a preferred embodiment, the at least one electrical conductor is wound around the outer surface of the duct 3.

Preferably the emitter device 122 comprises at least one electrical conductor 122 made in the form of a wire, cable, bar, plate. Preferably said electrical conductor is rigid or flexible.

Preferably, said electrical conductor 122', 122" has a first end and a second end.

According to a preferred embodiment, the electrical conductor 122'comprises a first end connected to the alternating signal generator device 121 while the second end is free (i.e., not operatively connected to the generator device). In this preferred embodiment the current circulating through the electrical conductor 122' is null and the magnetic induction imposed on the flow of water circulating in the duct is minimal, practically zero (or tending to zero taking into account any initial transients). This configuration makes it possible to minimize power losses and optimize the use of the electrical power available on board the vehicle for the operation of the water treatment device and the water injection system. According to this preferred embodiment, the electrical conductor 122' is configured as an antenna.

According to said embodiment, the frequency and amplitude of oscillation of the electrical signal generated by the signal generator and transmitted to the electric conductor 122' affect the intensity and frequency of the electric field generated in the water passage section. These values are also defined through the geometric characteristics of the electric conductor 122', in particular its length (understood as the distance between the first end and the second end) and the degree to which the electric conductor covers the outer surface of the duct (depending for example on the number of coils and the inter-coil distance). In the event that the electrical conductor is wrapped around the outer surface of the duct, the inner diameter of the inner cavity defined by the series of windings is also a geometric parameter to be considered.

According to an embodiment variant, the emitter device 122 comprises two plate-shaped electric conductors 122a, 122b positioned diametrically opposite on the duct 3, each electrically powered at a respective polarity of the alternating signal generator device 121. These plate-shaped electric conductors 122a 122b are spaced apart and form a capacitor.

According to said embodiment, the frequency and amplitude of oscillation of the electrical signal generated by the signal generator and transmitted to the electric conductor 122a, 122b affect the intensity and frequency of the electric field generated in the water passage section. These values are also defined through the geometric characteristics of the plate-shaped electric conductors 122a, 122b or the surface extension of the portion facing the other conductor (and therefore towards the duct) and the distance (average distance) existing between the plate-shaped elements 122a, 122b.

According to a further preferred embodiment, the electric conductor 122" has a first end and a second end respectively connected to different electrical polarities. In other words, both the first end and the second end are connected to the alternating signal generating device 121. According to this embodiment, the electric conductor 122" is affected by the circulation of an electric current following the application of a difference of potential at its ends.

According to said embodiment, the frequency and amplitude of oscillation of the electrical signal generated by the signal generator device 121 and transmitted to the electric conductor 122" affect the intensity and frequency of the induced electric field generated in the water passage section. These values are also defined through the geometric characteristics of the electric conductor 122", i.e. by the length, the number of windings and the internal diameter of the cavity defined by the series of windings and in which the portion of duct 3 affected by the electromagnetic field emission is positioned. According to a preferred embodiment, the emitter device 122 comprises both an electric conductor 123 wound on the duct 3 and two plate-shaped electric conductors 122a, 122b positioned diametrically opposite on the duct 3.

According to a preferred embodiment, the particle filter 150 comprises a porous filter septum.

Preferably, the particle filter 150 is suitable for filtering and retaining particles and/or aggregates, i.e. formed of aragonite and/or calcite crystals, of an average size of about 5 µm or greater.

Preferably, such particle filter may also be used to filter other solid contaminants present in the water such as dust, sand or other solid contaminants introduced into the tank or circuit at the time of refuelling.

According to a preferred embodiment, the particle filter 150 is configured as a removable and replaceable element when its filtering capacity is exhausted.

According to a preferred embodiment, in combination with a catalyst element 110 as described above the water treatment and filtration group 10 includes a particle filter 150 of the type with a pleated filter septum (of a star shape), or of the type with depth filter septum. In both cases the filter medium comprises, for example, a material in a non-woven fabric of synthetic fibres, preferably of polypropylene.

According to a preferred embodiment, the water treatment device 100 is housed in the tank 2.

According to a preferred embodiment, the particle filter 150 is housed in the duct 3.

Preferably, the particle filter 150 is positioned near the water treatment device 100. Preferably, the particle filter 150 is positioned downstream of the water treatment device 100 so as to fully intercept the stream of water circulating from the tank 2 toward the injector device 4.

In other embodiments, the particle filter 150 is in turn housed in the tank 2.

According to yet another preferred embodiment, the water treatment device 100 comprises both a catalyst element 110 having the characteristics described above and a variable electromagnetic field generating element 120 having the characteristics described above. In other words, the water treatment device 100 performs on the water a combined treatment aimed at facilitating the nucleation/formation of aragonite crystals and facilitating the aggregation of limescale ions and crystals into larger crystalline aggregates.

According to a preferred embodiment, the water treatment and filtration group 10 is a single component comprising along the water flow direction a catalyst element 110 and a particle filter 150.

According to a preferred embodiment, the water treatment and filtration group 10 is a single component comprising along the water flow direction a variable electromagnetic field generating element 120 and a particle filter 150.

According to a preferred embodiment, the water treatment and filtration group 10 is a single component comprising along the water flow direction a catalyst element 110, a variable electromagnetic field generating element 120 and a particle filter 150 as described above.

In particular, according to a preferred embodiment, the variable electromagnetic field generating element 120 comprises at least one electrical conductor arranged externally to the surface of the duct in which the catalyst element 110 is housed. According to a preferred embodiment, the electric conductor is coiled around the outer surface of the duct while the catalyst element is arranged inside the duct to be hit by the water stream; advantageously the porous body of the catalyst element 150 is made in a cylindrical/tubular form to be inserted inside the duct coaxially to the main axis of the duct and the coil of the electric conductor wound on the outer surface thereof.

In particular, the variable electromagnetic field generating element 120 is positioned downstream of the catalyst element 110 to determine the aggregation of limescale ions and crystals. According to a preferred embodiment, the water injection system 1 further comprises a pump group 5 for aspirating water from the tank 2 towards the injector device.

According to a preferred embodiment, said pump group 5 is fluidly located downstream of the water treatment and filtration group 10, receiving treated and filtered water.

Preferably, the water injection system 1 further comprises an additional auxiliary filtering device 7; preferably positioned downstream of the pump group 5 and upstream of the injector device 4.

According to some preferred embodiments, the auxiliary filtering device 7 is not provided and the particle filter 150 is positioned at said position instead of being provided upstream of the pump group 5.

Innovatively, the water injection system amply fulfils the purpose of the present invention by solving the problems arising in the typical solutions of the prior art.

Advantageously, in fact, mains water and not demineralised water is fed and flows in the water injection system. Therefore, advantageously, the problem of procuring demineralised water is overcome. In other words, advantageously, the problem related to the costs of using demineralised water is overcome.

Advantageously, the components of the system and in particular those fluidically downstream of the water treatment and filtration group are no longer subject to severe wear, present, instead, in the prior solutions in which untreated mains water circulates in the system.

Advantageously, the injector device does not need frequent maintenance and replacement. In fact, advantageously, the periodic replacement of the particle filter is eventually necessary.

Advantageously, the water treatment and filtration group is easy to integrate on a duct of a water injection system. Advantageously, the water treatment and filtration group is also easy to integrate into the current water supply circuits sized to operate with demineralised water. This possibility allows the immediate conversion of water injection systems operating with demineralised water, installing the water treatment and filtration group along the circuit, upstream of the injector device and pouring mains water into the tank.

Advantageously, the water treatment and filtration group consists of a simple and cost-effective solution that facilitates the installation of water supply circuits on petrol-powered vehicles and thus facilitates their diffusion on a large-scale market.

Advantageously, in some preferred embodiments, the water treatment and filtration group and/or some of its components are integrated or housed inside other components of the system.

Advantageously, eventual limescale-type incrustations formed in the supply system are simple to eliminate, consisting of crystals of aragonite and not calcite.

Advantageously, calcite formation is avoided and consequently the possibility of formation of hard and rough incrustations favourable to bacterial growth and potentially responsible for the formation of aggressive and harmful chemical environments for the chemical resistance of the injectors and mechanical components (pump, valves, sensors) integrated in the system and more generally in the vehicle is minimised.

Advantageously, only mains water is circulating in the water injection system, obviating the use of demineralised water, or the need to circulate aqueous solutions containing additives or filtration devices with ion exchange resins in turn suitable to perform an action against unwanted limescale particles.

It is clear that a person skilled in the art may make modifications to the water injection system and the water filtration and treatment group so as to satisfy contingent requirements, all contained within the scope of protection as defined by the following claims.

### List of reference numbers:

- 1: water injection system
- 2: tank
- 20: cap
- 3: duct
- 4: injector device
- 5: pump group
- 7: auxiliary filter device
- 10: water treatment and filtration group
- 100: water treatment device
- 110: catalyst element
- 120: variable electromagnetic field generating element
- 121: alternating signal generator device
- 122: emitter device
- 122', 122": electrical conductor
- 122a, 122b: plate-shaped electrical conductors
- 150: particle filter
- 900: battery

## Claims

1. A water injection system (1) of a vehicle, fluidly connected to the combustion chamber of a petrol-fuelled internal combustion engine group comprised in said vehicle, comprising:
- a storage tank (2) of the mains water;
- at least one duct (3) fluidically connecting the tank (2) to the combustion chamber of the engine group;
- at least one injector device (4) fluidically connected to the duct (3) and suitable to inject water into said combustion chamber;
- a water treatment and filtration group (10), fluidically located upstream of the injector device (4) so that the latter receives treated and filtered water, wherein the water treatment and filtration group (10) comprises:
i) a water treatment device (100) which performs a nucleation action on the limescale particles and/or an agglomeration action of ions of salts dispersed and dissolved in water;
ii) a particle filter (150) suitable to filter, from the water, the limescale particles formed by the water treatment device (100).

2. Water injection system (1) according to claim 1, wherein the water treatment device (100) comprises a catalyst element (110) by means of which, in the volume of water comprising ions and/or particles of calcite and/or particles of aragonite, the nucleation of the aragonite is favoured so as to facilitate the formation of solid particles of aragonite that are maintainable in suspension in the aqueous solution and effectively filtered by the particle filter (150).

3. Water injection system (1) according to claim 2, wherein the catalyst element (110) is a porous body, which is crossable by the water, wherein said catalyst element (110) is in its entirety or at least in part made of a metal material, of the type capable of promoting the nucleation of the aragonite, preferably a copper-based alloy, or a zinc-based alloy, or a copper-zinc-based alloy.

4. Water injection system (1) according to claim 3, wherein the catalyst element (110) is made in the form of a mesh or fabric, or honeycomb, or foam, or sintered metal, or perforated sheet, or micro-perforated sheet, or non-woven fabric with synthetic fibres interwoven with metal fibres or a combination of such embodiments.

5. Water injection system (1) according to claim 1, wherein the water treatment device (100) comprises a variable electromagnetic field generating element (120), suitable to create a pulsed or alternating electromagnetic field, so as to determine the formation of crystalline aggregates composed of ions and/or particles of limescale, which are effectively filterable by the particle filter (150).

6. Water injection system (1) according to claim 5, wherein the variable electromagnetic field generating element (120) comprises an alternating signal generating device (121) and at least an emitter device (122) operatively connected to the alternating signal generating device (121), for emitting an electromagnetic field in the water circulation space.

7. Water injection system (1) according to claim 6, wherein said emitter device (122) comprises an electric conductor (122') wound around the duct (3) having a first end operatively connected to the alternating signal generator device (121) and a second free end.

8. Water injection system (1) according to claim 6, wherein said emitter device (122) comprises two plate-shaped electric conductors (122a, 122b) positioned diametrically opposite on the duct (3), each operatively connected to a respective polarity of the alternating signal generator device (121).

9. Water injection system (1) according to claim 6, wherein said emitter device (122) comprises an electric conductor (122") wound around the duct (3) having a first end and a second end respectively operatively connected to the alternating signal generator device (121).

10. Water injection system (1) according to any one of the preceding claims, wherein the particle filter (150) is of the type with a pleated filter septum, or of the type with a depth filter septum preferably comprising a filter medium in a non-woven fabric of synthetic fibres, preferably of polypropylene.

11. Water injection system (1) according to any one of the preceding claims, wherein the water treatment device (100) is housed in the tank (2).

12. Water injection system (1) according to claim 1, wherein the water treatment device (100) comprises a catalyst element (110) according to any one of the claims from 2 to 4 and a variable electromagnetic field generating element (120) according to any of the claims from 5 to 9.

13. Water injection system (1) according to claim 12, wherein the water treatment and filtration group (10) is a single component comprising a catalyst element (110), a variable electromagnetic field generating element and a particle filter (150).

14. Water injection system (1) according to any one of the preceding claims, wherein the catalyst element (110), the variable electromagnetic field generating element (120) and the particle filter (150) are fluidically positioned in series with each other.

15. Water injection system (1) according to any one of the preceding claims, further comprising a pump group (5) for aspirating water from the tank (2) towards the injector device (4).

16. An insertable water treatment and filtration group (10), fluidically connected in a water injection system (1) according to any one of the preceding claims, wherein said water treatment and filtration group (10) is fluidically positionable upstream of the injector device (4) so that the latter receives treated and filtered water, wherein the water treatment and filtration group (10) comprises:
i) a water treatment device (100) which performs a nucleation action on the limescale particles and/or an agglomeration action of ions of salts dispersed and dissolved in water;
ii) a particle filter (150) suitable to filter from the water the limescale particles formed by the water treatment device (100).

17. Use of a water treatment and filtration group (10) according to claim 16, in a water injection system (1) of a vehicle, fluidically connected to the combustion chamber of a petrol-fuelled internal combustion engine group included in said vehicle.
